# EUROPEAN PATENT SPECIFICATION

(11) **EP 3 478 987 B1**
(45) Date of publication and mention of the grant of the patent: **29.04.2020**
(21) Application number: 17749519.9
(22) Date of filing: 27.06.2017
(51) Int. Cl.: F16F 13/14

(54) **A DAMPING BUSHING**
DÄMPFUNGSBUCHSE
BAGUE D'AMORTISSEMENT

(30) Priority: 29.06.2016 IT UA20164765
(43) Date of publication of application: 08.05.2019
(73) Proprietor: F.I.B.E.T. S.p.A., 10024 Moncalieri (IT)
(72) Inventor: VISCONTE, Giovanni, 10137 Torino (IT)
(74) Representative: Monelli, Alberto
(86) International application number: PCT/IB2017/053843
(87) International publication number: WO 2018/002829

(56) References cited:
- EP-A1- 2 881 615
- EP-A2- 0 372 169
- EP-A2- 0 524 665
- EP-A2- 2 620 302
- GB-A- 2 207 214
- US-A- 5 098 072

## Description

### Technical field

The present invention relates to a damping bushing of a load transmittable between two external masses. In the technical sector this type of bushing is also known as a hydraulic bushing. This type of bushing enables having a dynamic stiffening and a drastic increase in damping in a predefined range of frequencies.

### Background art

In road vehicles a measure of comfort is NVH, an acronym for Noise, Vibration, Harshness. An optimal suspension system must enable excellent acoustic insulation inside the carriage, a drastic reduction in vibrations perceived by the driver as well as improving the readiness of the vehicle in responding to the driver's commands. For this purpose, the prior art contains hydraulic supports used in high-range and high-performance vehicles.

The hydraulic supports are made in the form of cones (vertical application of the load) or in the form of bushings (radial application of the load).

In particular, the bushings comprise an internal sleeve, an external sleeve and an elastomeric body interposed between them. The elastomeric body defines two chambers that are fluid-dynamically coupled by a narrow-section conduit.

During use the stresses to which the bushing is subject will alternatively determine:
- a compression of the first chamber accompanied by a dilation of the second chamber;
- a compression of the second chamber accompanied by a dilation of the first chamber.

This determines the displacement of a non-compressible fluid between the first and the second chamber through said conduit.

The internal sleeve and the external sleeve are respectively connected to a first and a second support (two external masses) and the bushing enables damping determined oscillations between the two supports, and in particular enables obtaining a dynamic stiffening and a drastic increase of the damping at a specific frequency. In the case of application to a vehicle, a rigid and high-performing behaviour is obtained in a case of rapid steering changes and sharp braking, while succeeding in cutting the frequencies generated by the motor. Similar damping bushings are disclosed e.g. in documents EP2620302 and US5098072.

The above-indicated solutions, while offering good results, are not free from drawbacks. A critical aspect of these components is resistance to fatigue and therefore the duration.

A further critical point is linked to the seal of the non-compressible fluid internal of the bushing as the significant pressures that build up alternatively in the first and the second chamber cause much stress on the seals.

A further aspect is linked to the fact that the considerable dimensions of the hydraulic supports have always limited use thereof in motor suspension systems, excluding application thereof to frame suspension systems.

### Disclosure of the invention

In this context, the technical task underlying the present invention is to propose a bushing which obviates the drawbacks in the known art as described above.

In particular an aim of the present invention is to provide a bushing able to have a low static rigidity value and a high dynamic rigidity value starting from a specific frequency.

The stated technical task and specified objects are substantially achieved by a bushing comprising the technical features disclosed in one or more of the appended claims.

### Brief description of drawings

Further characteristics and advantages of the present invention will become more apparent from the following indicative, and hence nonlimiting, description of a preferred, but not exclusive, embodiment of a bushing as illustrated in the appended drawings, in which:

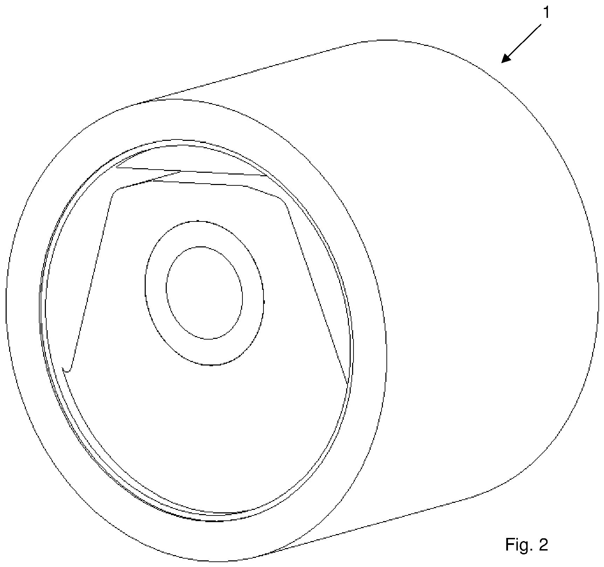

- figures 1 and 2 show two perspective views of a same bushing according to the present invention;
- figures 3 and 4 show two mutually-perpendicular section views of a bushing according to the present invention;
- figure 5 shows a perspective view of a component of a bushing according to the present invention;
- figure 6 shows a perspective view of some components of a bushing according to the present invention, in an alternative constructional solution with respect to those of figures 1-5.

### Detailed description of preferred embodiments of the invention

In the appended figures, reference numeral 1 denotes a damping bushing of a load transmittable between two masses external of the bushing. The load is prevalently or totally radial.

The bushing 1 can be used for supporting a frame or a motor or other suspended parts, for example in a road vehicle, but might also be used with success in other machinery.

The bushing 1 comprises an element 2 constrainable to one of said two masses. Typically the element 2 is a hollow body, preferably elongate, for example it is a hollow cylinder with a through-hole. The element typically has a longitudinal prevalent extension.

The bushing 1 comprises a sleeve 3 which surrounds said element 2 and is constrainable to another of said two masses. The element 2 and the sleeve 3 extend mainly along two longitudinal and reciprocally parallel axes. The sleeve 3 and/or the member 2 are advantageously made of a metal material.

The bushing 1 further comprises an elastomeric body 4 radially interposed between said element 2 and said sleeve 3. The elastomeric body 4 is in contact with both the element 2 and with the sleeve 3. The elastomeric body 4 is appropriately annular. The element 2 advantageously has a cylindrical axis of symmetry and the elastomeric body 4 surrounds the axis. The elastomeric body 4 is preferably made of rubber, typically vulcanised rubber.

The elastomeric body 4 defines or contributes to defining a first chamber 40. For example, in the solution illustrated in the accompanying figures the elastomeric body 4 contributes to defining, together with the sleeve 3, the first chamber 40.

The bushing 1 further comprises an expansion chamber 5 and fluid-dynamic connecting means 6 of the first chamber 40 and the expansion chamber 5.

A non-compressible fluid is also present, which moves between the first chamber 40 and the expansion chamber 5 by means of the fluid-dynamic connecting means 6. The non-compressible fluid might for example be constituted by a water and glycol solution (for this reason bushings of this type are also known in the sector as hydraulic bushings; in any case the presence of water in the non-compressible fluid is not required). The radial displacement of the sleeve 3 with respect to said element 2 alternatively pumps the fluid from the first chamber 40 towards the expansion chamber 5 and recalls the fluid by depression from the expansion chamber 5 towards the first chamber 40. As will clearly emerge from the following, the expansion chamber 5 receives the non-compressible fluid, but does not exert a pumping force or an aspirating force or in any case the action is decidedly lower with respect to that of the first chamber 40. The fluid acts as a resonating element and enables an increase in rigidity in a predetermined range of frequency of the oscillations to be damped.

The fluid-dynamic connecting means 6 comprise a conduit 60. The conduit 60 defines a narrow conduit. In other words, passing from the first chamber 40 to the conduit 60 a reduction of a passage section of the fluid takes place; likewise, when opening from the conduit 60 into the expansion chamber 5 a broadening of the passage section available to the fluid takes place.

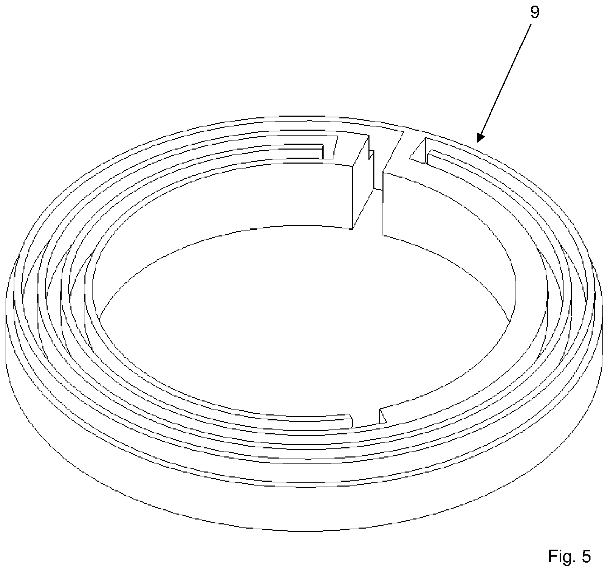

The connecting means 6 (in particular the conduit 60) are also known in the technical sector as "Inertia Track". The conduit 60 preferably extends along a curved pathway. The conduit 60 possibly comprises at least a spiralling portion. The turns of the spirals are advantageously coplanar. In an alternative solution, the conduit 60 comprises a labyrinthine pathway in which a plurality of arcs (in communication with one another) are located in succession internally of one another (see for example figure 5). The arcs are advantageously concentric and/or coplanar. The above-indicated specifications enable elongating the pathway, while keeping the volume limited.

For optimal functioning (i.e. for locating the increase in resonance at a predetermined specific frequency), the ratio between the section and the length of the conduit 60 must fall within a predetermined range. The larger the section, the longer the conduit 60 must be. Contemporaneously, the larger the section the more stable the bushing 1 is. By stability it is meant that on varying the dynamic deflections the behaviour of the bushing (in particular the centring of the peak which indicated the increase in resonance) is always the same. On the other hand, with smaller sections, the smaller the dynamic displacement the more the peak falls into low frequency. The increase in the section and the length of the conduit further enable increasing the volume and therefore the mass of the resonating fluid internal thereof, enabling an increase of the damping capacity of the support as well as the dynamic stiffening at the predetermined frequency. The first chamber 40 and the expansion chamber 5 can be connected by a single pathway.

In a particular constructional solution, not illustrated, the conduit 60 can comprise an alternative first and second pathway which place the first chamber 40 and the expansion chamber 5 in communication. The bushing 1 comprises decoupling means (known as decouplers in the technical sector) located along the second pathway. The decoupling means preferably comprise a piston. Above a certain displacement undergone by the bushing 1, the piston is positioned in contact with a surface of the second pathway, obstructing the passage along the second pathway. For smaller displacements, the passage of the fluid is instead permitted. When the second pathway is closed, the bushing functions normally. When the piston enables passage of the fluid through the second pathway, the hydraulics are annulled. The decoupling means therefore enable excluding the hydraulic behaviour of the bushing 1 for small displacements and reducing the dynamic stiffening at high-frequency.

The bushing 1 comprises an additional flexible expansion membrane 50 that at least partly delimits the expansion chamber 5. The expansion chamber 5 is external of said elastomeric body 4 and is not even partly delimited by said elastomeric body 4. The expansion chamber 5 is appropriately located at an axial end of the bushing 1.

The membrane 50 expands and contracts transversally to a radial direction between said element 2 and said sleeve 3. In fact the membrane 50 deforms along parallel direction to the longitudinal extension direction of the member 2 and the sleeve 3.

The elastomeric membrane 50 has the sole aim of aiding a change in positive or negative volume due to the displacement of the fluid. The point of application of the load does not act on the membrane 50 to compress it. For this reason, in the foregoing it was specified that the membrane 50 does not have a pumping action or in any case has a pumping action that is entirely irrelevant.

The expansion chamber 5 extends in an annular fashion.

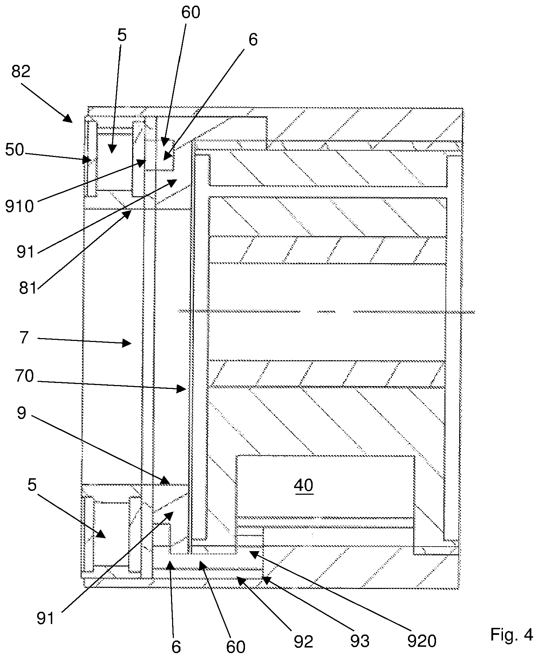

As shown by way of example in figure 4, the expansion chamber 5 surrounds a compartment 7. The bushing 1 comprises a bottom 70 of the compartment 7 which is interposed between the compartment 7 and the elastomeric body 4. The bottom 70 thus separates the compartment 7 and the elastomeric body 4.

The flexible membrane 50 advantageously separates the expansion chamber 5 from a zone that is external of the bushing 1 in which air at atmospheric pressure is present.

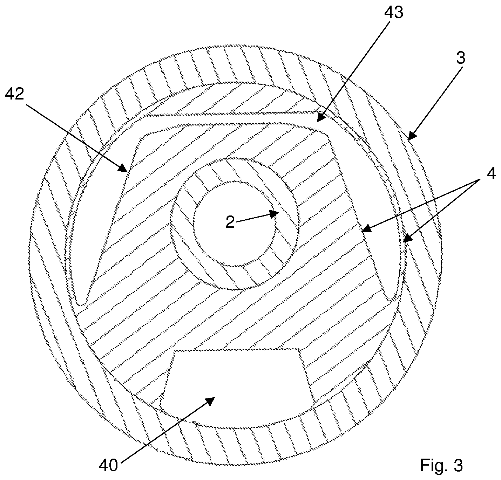

The element 2 is eccentric with respect to the sleeve 3 in the absence of external forces acting on the bushing 1. The eccentricity of the element 2 with respect to the external sleeve 3 can be comprised for example between 5% and 15% of an external diameter of the sleeve 3. Therefore, at least when the bushing 1 is not connected to external masses the element 2 is eccentric with respect to the sleeve 3. The fact that the elastomeric body 4 does not contribute to defining the first chamber 5 enables positioning the element 2 eccentrically. In fact, with reference to figure 3, the element 2 will have enough space to displace upwards and will be able to do this without compressing the first chamber 5. Further, this enables obtaining a soft bushing in static conditions. Once associated to the masses to be damped the element 2 and the sleeve 3 become coaxial.

A longitudinal axis of the member 2 and a longitudinal axis of the sleeve 3 are not coaxial. They however remain substantially parallel.

A hollow space 43 is present internally of the sleeve 3, from which said fluid is absent (it is typically occupied by air). The hollow space 43 is at least in part defined by the elastomeric body 4. The hollow space 43 is preferably surrounded by the elastomeric body 4.

The elastomeric body 4 comprises a first portion 41 and a projection 42 which extends in a cantilever fashion towards the first portion 41. The first portion 41 extends perimetrally lying against the sleeve 3. The hollow space 43 extends between a first portion 41 and the projection 42. The hollow space 43 preferably surrounds said projection 42 on three sides. The first chamber 40 is directly opposite the first portion 41 with respect to said sleeve 3. The first chamber 40 is external of the projection 42. The element 3 is located at least partly internally of the projection 42. In particular the projection 42 completely envelops an axial portion of the element 3.

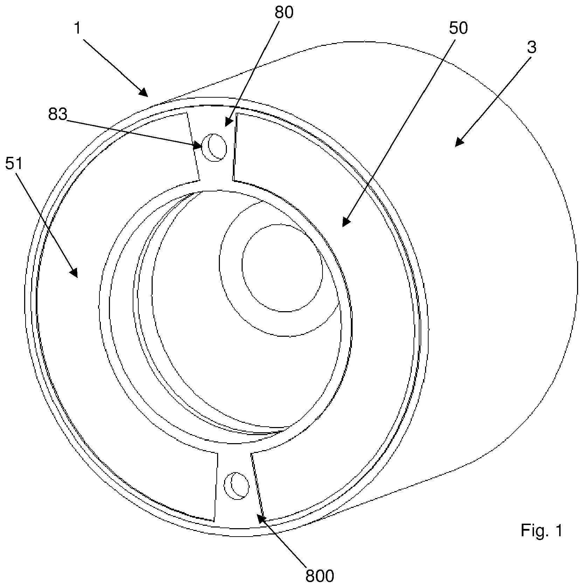

As shown by way of example in figure 4, the expansion chamber 5 extends radially between an internal annular edge 81 and an external annular edge 82. The bushing 1 comprises a flap 80, preferably metal, which extends radially and connects the internal annular edge 81 and the external annular edge 82. The flap 80 comprises a hole 83 for introduction of the non-compressible fluid into the expansion chamber 5. An obturator (preferably unremovable) obstructs the hole 83. With the aim of introducing a non-compressible fluid, first a depression is generated internally of the expansion chamber 5 and the first chamber 40. At this point the non-compressible fluid is introduced, and then everything is occluded (for example by forcing the obturator internally of the hole 83). The obturator is preferably a metal cap inserted by friction force into the hole 83. The bushing 1 advantageously comprises an additional flexible membrane 51 that delimits the expansion chamber 5. As can be observed in figure 1, the membrane 50 and the additional membrane 51 delimit a same face of the expansion chamber 5. The membrane 50 and the additional membrane 51, in the solutions illustrated by way of example, extend as two arcs. They are separated by the flap 80 described in the foregoing and appropriately also by an additional flap 800. The membrane 50 and/or the additional membrane 51 are free to move as a function of the pressure present in the expansion chamber 5.

The bushing 1 comprises an annular structure 9 at least partly houses the conduit 60. The annular structure 9 is at least in part (preferably entirely) surrounded by the sleeve 3.

The annular structure 9 comprises at least a first and a second portion 91, 92. The first portion 91 is axially interposed between the expansion chamber 5 and the elastomeric body 4. The axial direction is to be evaluated with respect to the direction of the longitudinal axis of the sleeve 3 and the element 2. The first portion 91 comprises an opening 910 which enables fluid communication of the conduit 60 with the expansion chamber 5. The second portion 92 surrounds the elastomeric body 4 in an annular fashion. The second portion 92 comprises an opening 920 which enables fluid communication of the conduit 60 with the first chamber 40. The passage of the fluid from first chamber 40 to the conduit 60 takes place radially. The second portion 92 is preferably interposed between the expansion chamber 5 and a step 93 fashioned in said sleeve 3.

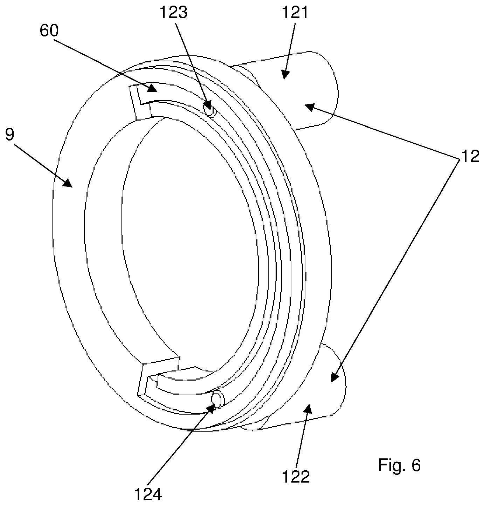

In a particular construction solution the non-compressible fluid suitable for displacing between the first and the second chamber 40, 5 via the conduit 60 is a magnetorheological fluid (in this matter refer to figure 6). A magnetorheological fluid is a material that displays a change in rheological behaviour following the application of a magnetic field. The application of a magnetic field and the intensity thereof is therefore able to modify, substantially reversibly, the viscosity of a like fluid (the density is not modified).

Magnetorheological fluids advantageously comprise ferromagnetic particles suspended in a vehicle fluid, very often an organic solvent or water. The ferromagnetic nano-particles are coated with a surfactant for preventing agglomeration thereof. A non-exclusive example of a magnetorheological fluid is MR Fluid MRF-132DG Lord Corporation.

The bushing 1 can further comprise generating means 12 of a magnetic field for exciting the magnetorheological fluid.

The generating means 12 of a magnetic field for exciting the magnetorheological fluid comprise:
- a first coil 121 (which is advantageously external of said conduit 60) in turn comprising a plurality of turns;
- a first ferromagnetic insert 123 positioned at least partly internally of the turns.

The first insert 123 is in contact with the fluid, in particular sprays the fluid along said conduit 60. The first insert 123 is advantageously located internally of the conduit 60 and in part externally of the conduit 60.

The generating means 12 of a magnetic field for exciting the magnetorheological fluid preferably comprise a second coil 122 comprising in turn a plurality of turns and a second ferromagnetic insert 124 positioned at least partly internally of the turns and spraying the fluid along said conduit 60. A plurality of elements generating a magnetic field able to modify the viscosity of the magnetorheological fluid is advantageously present along the conduit 60.

At least the first and second insert 123, 124 of the conduit 60 are advantageously made of a diamagnetic or paramagnetic material (for example plastic or aluminium alloy).

The above-indicated specifications enable concentrating the magnetic field, making the action on the fluid more effective.

Acting on the viscosity of the fluid has the advantage of increasing the modulus value of the dynamic rigidity of the bushing 1 without modifying the shape thereof and without varying the resonance frequency characteristic of the support. Further, in this way use of electromechanical organs is prevented, with the advantage of increasing the sturdiness of the final product. The dynamic characteristics of the bushing 1 can then be changed when required, by means of an active control. The behaviour of the bushing 1 can therefore be adapted time-by-time to the specific requirements. For example a control unit might be included, acting on the generating means 12 of a magnetic field for exciting the magnetorheological fluid. In the case of an application of a road vehicle, the control unit might be the electronic control unit of the vehicle.

The invention as it is conceived enables achieving multiple advantages.

By realising the first chamber 40 not in contact with the elastomeric body 4, a very soft system can be obtained, lengthening the life of the product against fatigue (if the system were very soft and two chambers were housed in the body 4 connected to the Inertia Track, one of the two would work in traction and be poorly supported by the elastomeric materials, compromising the working life thereof).

The bushing of the present invention therefore enables obtaining dynamic stiffening ratios that are decidedly superior to those obtainable with a standard hydraulic bushing, given a same working life.

Further, a solution of this type (positioning the first chamber 40 not in contact with the elastomeric body 4) enables having greater space available internally of the sleeve 3 for housing the decoupler, improving the dynamic behaviour of the high-frequency hydraulic bushing. The solution proposed further enables significantly limiting the dimensions of the whole support, making the product also suitable for application of suspension systems of the frame.

A further advantage is linked to the fact that it is easier to contain the fluid as the pressure leap between the first chamber 40 and the expansion chamber 5 is lower than a situation in which both the chambers are fashioned in the elastomeric body 4 (in this case one chamber would push and the other would aspirate, generating a greater pressure leap which would make it more difficult to prevent undesired leakage of the non-compressible fluid).

The invention as it is conceived is susceptible to numerous modifications, all falling within the scope of the appended claims.

Further, all the details can be replaced with other technically-equivalent elements. In practice, all the materials used, as well as the dimensions, can be any according to requirements.

## Claims

1. A damping bushing of a load transmittable between two masses that are external of the bushing, said bushing (1) comprising:
- an element (2) constrainable to one of said two masses;
- a sleeve (3) which surrounds said element (2) and is constrainable to another of said two masses;
- an elastomeric body (4) radially interposed between said element (2) and said sleeve (3), said elastomeric body (4) defining or contributing to define a first chamber (40);
- an expansion chamber (5) and fluid-dynamic connecting means (6) of the first chamber (40) and the expansion chamber (5);
- a non-compressible fluid which moves between the first chamber (40) and the expansion chamber (5) by means of the fluid-dynamic connecting means (6); the radial displacement of the sleeve (3) with respect to said element (2) alternatively pumping the fluid from the first chamber (40) towards the expansion chamber (5) and having the fluid return by depression from the expansion chamber (5) towards the first chamber (40);
the expansion chamber (5) being at least partly delimited by a flexible expansion membrane (50), being external of said elastomeric body (4) and not being even partly delimited by said elastomeric body (4); **characterised in that** the membrane (50) expands and contracts transversally of a radial transmission direction of the load between said element (2) and said sleeve (3);
a hollow space (43) being present internally of the sleeve (3), said fluid being absent from the hollow space (43), said hollow space (43) being at least partly defined by the elastomeric body (4).

2. The bushing according to claim 1, **characterised in that** the expansion chamber (5) extends in an annular fashion.

3. The bushing according to any one of the preceding claims, **characterised in that** the expansion chamber (5) surrounds a compartment (7); a bottom (70) of the compartment (7) separating the compartment (7) from said elastomeric body (4).

4. The bushing according to any one of the preceding claims, **characterised in that** the flexible membrane (50) separates the expansion chamber (5) from a zone that is external of the bushing (1) in which air at atmospheric pressure is present.

5. The bushing according to any one of the preceding claims, **characterised in that** the element (2) is eccentric with respect to the sleeve (3) in the absence of external forces acting on the bushing (1).

6. The bushing according to any one of the preceding claims, **characterised in that** the elastomeric body (4) comprises:
- a first portion (41) which extends perimetrally lying against the sleeve (3);
- a projection (42) which projects in a cantiliver fashion towards said first portion (41); the hollow space (43) extending between the first portion (41) and the projection (42).

7. The bushing according to any one of the preceding claims, **characterised in that** the expansion chamber (5) extends radially between an internal annular edge (81) and an external annular edge (82); said bushing (1) comprising a metal flap (80) which extends radially and connects the internal annular edge (81) and the external annular edge (82); the flap (80) comprising a hole (83) for introduction of the non-compressible fluid into the expansion chamber (5); an unremovable obturator obstructing the flap (80).

8. The bushing according to any one of the preceding claims, **characterised in that** the elastomeric bushing (4) is annular.

## Patentansprüche

1. Dämpfungsbuchse einer Last, die zwischen zwei Massen, die außerhalb der Buchse sind, übertragbar ist, wobei die Buchse (1) umfasst:
- ein Element (2), das auf eine der beiden Massen festgespannt werden kann;
- eine Hülse (3), die das Element (2) umgibt und auf eine andere der beiden Massen festgespannt werden kann;
- einen Elastomerkörper (4), der radial zwischen dem Element (2) und der Hülse (3) angeordnet ist, wobei der Elastomerkörper (4) eine erste Kammer (40) definiert oder dazu beiträgt, diese zu definieren;
- eine Expansionskammer (5) und fluiddynamische Verbindungsmittel (6) der ersten Kammer (40) und der Expansionskammer (5);
- ein nicht komprimierbares Fluid, das sich mittels der fluiddynamischen Verbindungsmittel (6) zwischen der ersten Kammer (40) und der Expansionskammer (5) bewegt; wobei die radiale Verschiebung der Hülse (3) in Bezug auf das Element (2) alternativ das Fluid von der ersten Kammer (40) in Richtung der Expansionskammer (5) pumpt und das Fluid durch Unterdruck von der Expansionskammer (5) in Richtung der ersten Kammer (40) zurückführen lässt;
wobei die Expansionskammer (5) zumindest teilweise durch eine flexible Expansionsmembran (50) begrenzt ist, die außerhalb des Elastomerkörpers (4) liegt und nicht einmal teilweise durch den Elastomerkörper (4) begrenzt ist;
**dadurch gekennzeichnet, dass** sich die Membran (50) quer zu einer radialen Übertragungsrichtung der Last zwischen dem Element (2) und der Hülse (3) ausdehnt und zusammenzieht;
wobei ein Hohlraum (43) innerhalb der Hülse (3) anwesend ist, wobei das Fluid im Hohlraum (43) abwesend ist, wobei der Hohlraum (43) zumindest teilweise durch den Elastomerkörper (4) definiert ist.

2. Buchse nach Anspruch 1, **dadurch gekennzeichnet, dass** sich die Expansionskammer (5) ringförmig erstreckt.

3. Buchse nach einem der vorhergehenden Ansprüche, **dadurch gekennzeichnet, dass** die Expansionskammer (5) eine Unterteilung (7) umgibt; wobei ein Boden (70) der Unterteilung (7) die Unterteilung (7) von dem Elastomerkörper (4) trennt.

4. Buchse nach einem der vorhergehenden Ansprüche, **dadurch gekennzeichnet, dass** die flexible Membran (50) die Expansionskammer (5) von einer Zone trennt, die außerhalb der Buchse (1) liegt, in der Luft mit atmosphärischem Druck abwesend ist.

5. Buchse nach einem der vorhergehenden Ansprüche, **dadurch gekennzeichnet, dass** das Element (2) in Bezug auf die Hülse (3) in Abwesenheit von äußeren Kräften, die auf die Buchse (1) einwirken, exzentrisch ist.

6. Buchse nach einem der vorhergehenden Ansprüche, **dadurch gekennzeichnet, dass** der Elastomerkörper (4) umfasst:
- einen ersten Abschnitt (41), der sich perimetral gegen die Hülse (3) liegend erstreckt;
- einen Vorsprung (42), der freitragend in Richtung des ersten Abschnitts (41) vorsteht; wobei der Hohlraum (43) sich zwischen dem ersten Abschnitt (41) und dem Vorsprung (42) erstreckt.

7. Buchse nach einem der vorhergehenden Ansprüche, **dadurch gekennzeichnet, dass** sich die Expansionskammer (5) radial zwischen einer inneren ringförmigen Kante (81) und einer äußeren ringförmigen Kante (82) erstreckt; wobei die Buchse (1) eine Metallklappe (80) umfasst, die sich radial erstreckt und die innere ringförmige Kante (81) und die äußere ringförmige Kante (82) verbindet; wobei die Klappe (80) ein Loch (83) zum Einbringen des nicht komprimierbaren Fluids in die Expansionskammer (5) umfasst; wobei ein nicht entfernbarer Verschluss die Klappe (80) verschließt.

8. Buchse nach einem der vorhergehenden Ansprüche, **dadurch gekennzeichnet, dass** die Elastomerbuchse (4) ringförmig ist.

## Revendications

1. Bague d'amortissement d'une charge transmissible entre deux masses étant extérieures à la bague, ladite bague (1) comprenant :
- un élément (2) pouvant être solidaire de l'une desdites deux masses ;
- un manchon (3) qui entoure ledit élément (2) et qui peut être solidaire de l'autre desdites deux masses ;
- un corps élastomère (4) interposé radialement entre ledit élément (2) et ledit manchon (3), ledit corps élastomère (4) définissant ou contribuant à définir une première chambre (40) ;
- une chambre d'expansion (5) et des moyens de raccordement fluido-dynamique (6) de la première chambre (40) et de la chambre d'expansion (5) ;
- un fluide incompressible se déplaçant entre la première chambre (40) et la chambre d'expansion (5) à l'aide des moyens de raccordement fluido-dynamique (6) ; le déplacement radial du manchon (3) par rapport au dit élément (2) pompant alternativement le fluide de la première chambre (40) vers la chambre d'expansion (5) et faisant revenir le fluide par dépression de la chambre d'expansion (5) vers la première chambre (40) ; la chambre d'expansion (5) étant au moins partiellement délimitée par une membrane d'expansion (50) flexible, étant extérieure au dit corps élastomère (4) et n'étant même pas partiellement délimitée par ledit corps élastomère (4) ;
**caractérisée en ce que** la membrane (50) se dilate et se contracte transversalement à une direction de transmission radiale de la charge entre ledit élément (2) et ledit manchon (3) ;
un espace creux (43) étant présent à l'intérieur du manchon (3), ledit fluide étant absent de l'espace creux (43), ledit espace creux (43) étant au moins partiellement défini par le corps élastomère (4).

2. Bague selon la revendication 1, **caractérisée en ce que** la chambre d'expansion (5) s'étend de manière annulaire.

3. Bague selon l'une quelconque des revendications précédentes, **caractérisée en ce que** la chambre d'expansion (5) entoure un compartiment (7) ; un fond (70) du compartiment (7) séparant le compartiment (7) dudit corps élastomère (4).

4. Bague selon l'une quelconque des revendications précédentes, **caractérisée en ce que** la membrane flexible (50) sépare la chambre d'expansion (5) d'une zone étant extérieure à la bague (1) dans laquelle se trouve de l'air à la pression atmosphérique.

5. Bague selon l'une quelconque des revendications précédentes, **caractérisée en ce que** l'élément (2) est excentrique par rapport au manchon (3) en l'absence de forces extérieures agissant sur la bague (1).

6. Bague selon l'une quelconque des revendications précédentes, **caractérisée en ce que** le corps élastomère (4) comprend :
- une première partie (41) qui s'étend périmétralement en appui contre le manchon (3) ;
- une saillie (42) qui dépasse en porte-à-faux vers ladite première partie (41) ; l'espace creux (43) s'étendant entre la première partie (41) et la saillie (42).

7. Bague selon l'une quelconque des revendications précédentes, **caractérisée en ce que** la chambre d'expansion (5) s'étend radialement entre un bord annulaire (81) interne et un bord annulaire (82) externe ; ladite bague (1) comprenant un rabat métallique (80) se prolongeant radialement et reliant le bord annulaire (81) interne et le bord annulaire (82) externe ; le rabat (80) comprenant un orifice (83) pour l'introduction du fluide incompressible dans la chambre d'expansion (5) ; un obturateur inamovible obstruant le rabat (80).

8. Bague selon l'une quelconque des revendications précédentes, **caractérisée en ce que** la bague en élastomère (4) est annulaire.
